# EUROPÄISCHE PATENTSCHRIFT

(11) **EP 3 911 878 B1**
(45) Veröffentlichungstag und Bekanntmachung des Hinweises auf die Patenterteilung: **21.08.2024**
(21) Anmeldenummer: 19801664.4
(22) Anmeldetag: 23.10.2019
(51) Int. Cl.: F16H 57/022, F16H 57/08

(54) **SYSTEM UND VERFAHREN ZUM EINSTELLEN EINES VORSPANNKRAFTWERTES BEI EINEM SYSTEM, AUFWEISEND EINE WELLE, EIN GEHÄUSETEIL UND ZWEI LAGER SOWIE EIN FIXIERUNGSELEMENT**
SYSTEM AND METHOD FOR ADJUSTING A PRELOAD FORCE VALUE IN A SYSTEM COMPRISING A SHAFT, A HOUSING PART, TWO BEARINGS AND A FIXING ELEMENT
SYSTÈME ET PROCÉDÉ DE RÉGLAGE D'UNE VALEUR DE FORCE DE PRÉCONTRAINTE DANS UN SYSTÈME COMPORTANT UN ARBRE, UNE PARTIE DE CARTER ET DEUX PALIERS AINSI QU'UN ÉLÉMENT DE FIXATION

(30) Priorität: 28.11.2018 DE 102018009327
(43) Veröffentlichungstag der Anmeldung: 24.11.2021
(73) Patentinhaber: SEW-EURODRIVE GmbH & Co. KG, 76646 Bruchsal (DE)
(72) Erfinder: SCHNEIDER, Norbert, 64668 Rimbach (DE); BLÖMEKE, Jens, 64560 Riedstadt (DE); LAMAJ, Ermalt, 68161 Mannheim (DE); LAUER, Christian, 67378 Zeiskam (DE)
(86) Internationale Anmeldenummer: PCT/EP2019/025357
(87) Internationale Veröffentlichungsnummer: WO 2020/108791

(56) Entgegenhaltungen:
- DE-A1- 10 207 396
- DE-A1- 102010 004 043
- DE-A1- 102013 208 480
- DE-A1- 102015 220 013
- DE-B4- 10 207 396
- DE-B4- 102010 004 043
- US-A- 5 877 433
- US-A1- 2004 177 509

## Beschreibung

Die Erfindung betrifft ein Verfahren zum Einstellen eines Vorspannkraftwertes bei einem System, aufweisend eine Welle, ein Gehäuseteil und zwei Lager sowie ein Fixierungselement.

Aus der JP 2000 - 120 846 A ist hierzu eine Lageranordnung bei einem Getriebe bekannt. Hierbei ist eine Wellenmutter zum Einstellen einer Vorspannung der Lageranordnung bekannt, aber der innerlich in der Anordnung vorliegende Vorspannkraftwert ist unbekannt.

Aus der DE 10 2015 220 013 A1 ist als nächstliegender Stand der Technik eine Lageranordnung bekannt, die Kegelrollenlager aufweist.

Aus der EP 3 369 965 A1 ist ein Übertragungsgetriebe bekannt.

Aus der US 2008 / 0 207 377 A1 ist ein intern oszillierendes Planetengetriebesystem bekannt.

Aus der DE 10 2005 039 133 A1 ist ein Planetenuntersetzungsmechanismus bekannt.

Aus der DE 10 2015 014 087 A1 ist ein Getriebe mit Anlaufscheibe und Schräglager bekannt.

Aus der DE 102 07 396 A1 ist ein Getriebe bekannt.

Aus der DE 10 2013 208 480 A1 ist ein Verfahren zur Einstellung der Vorspannung in einer Lageranordnung bekannt.

Aus der US 2004/0177509 A1 ist ein Verfahren zum Setzen von Lagern und Verifizieren einer Vorspannung bekannt.

Aus der DE 10 2010 004 043 A1 ist eine Untersetzungsvorrichtung bekannt.

Aus der US 5,877,433 A ist ein Verfahren zum Messen der Lagervorspannung bekannt.

Der Erfindung liegt daher die Aufgabe zugrunde, das Vorspannen eines Lagerungssystems einer Welle weiterzubilden.

Erfindungsgemäß wird die Aufgabe bei dem Verfahren nach den in Anspruch 1 angegebenen Merkmalen gelöst.

Von Vorteil ist dabei, dass die Lagerluft auch unter Berücksichtigung der Elastizitäten der Welle und anderer Bauteile sicher einstellbar ist. Somit ist dann mit der eingestellten Verschiebung, insbesondere Relativposition, der Vorspannkraftwert genau erreicht. Dabei sind Fertigungstoleranzen und andere Störgrößen eliminiert. Denn auch wenn jedes individuelle Getriebe den Vorspannkraftwert bei unterschiedlichen Verschiebungswerten erreicht, ist somit der individuelle Verschiebungswert erfindungsgemäß eingestellt. Das Fixierungselement ist als Wellenmutter oder durch Passscheiben mit Sicherungsring realisierbar.

Bei der Erfindung ist eine Welle gelagert mittels zweier in einem Gehäuseteil aufgenommenen Lager. Nach Ausführen der erfindungsgemäßen Herstellung ist die Lagerluft des Lagers nicht abhängig von Fertigungstoleranzen.

Wichtige Merkmale bei **einem** System, aufweisend eine Welle, ein Gehäuseteil und zwei Lager sowie eine Wellenmutter, **zur Durchführung des Verfahrens** sind, dass
ein erstes Lager im Gehäuseteil aufgenommen ist und ein zweites Lager im Gehäuseteil aufgenommen ist,
wobei die Welle drehbar gelagert ist mittels des ersten und zweiten Lagers,
wobei die Welle einen Wellenbund, insbesondere also eine Stufe, aufweist, an welchem der Innenring des ersten Lagers anliegt,
wobei der Außenring des ersten Lagers an einem nach radial innengerichteten Bund des Gehäuseteils anliegt,
wobei der Außenring des zweiten Lagers an dem nach radial innengerichteten Bund des Gehäuseteils anliegt,
wobei der Innenring des zweiten Lagers an der Wellenmutter anliegt, deren Innengewinde auf ein Außengewinde der Welle aufgeschraubt ist.
Von Vorteil ist dabei, dass der gewünscht Vorspannwert mittels der Wellenmutter einbringbar ist.

Bei einer vorteilhaften Ausgestaltung ist das erste und das zweite Lager jeweils ein Wälzlager, insbesondere ein Kugellager oder ein Schrägrollenlager, insbesondere in O-Anordnung oder X-Anordnung. Von Vorteil ist dabei, dass die Vorspannung dieser Lager einstellbar ist. Erfindungsgemäß wird dies mit der Wellenmutter erreicht. Insbesondere bei der X-Anordnung ist somit eine hohe Standzeit bei hohen, von den miteinander im Eingriff sich befindenden Verzahnungsteilen eines Getriebes erzeugten Kräften erreichbar, da auch bei Belastung und Belastungsschwankungen im Betrieb Lagerspiel stets verhindert wird. Bei der O-Anordnung ist ebenfalls eine hohe Standzeit erreichbar, auch wenn hohe Querkräfte als Belastung auftreten.

Bei einer vorteilhaften Ausgestaltung ist der nach radial innengerichtete Bund des Gehäuseteils axial zwischen dem ersten und dem zweiten Lager angeordnet,
wobei die Wellenmutter auf der vom Wellenbund axial abgewandten Seite des zweiten Lagers angeordnet ist,
wobei der Wellenbund auf der von der Wellenmutter axial abgewandten Seite des ersten Lagers angeordnet ist. Von Vorteil ist dabei, dass die Vorspannung durch den Bund des Gehäuseteils geleitet wird.

Bei der Erfindung ist eine Welle gelagert mittels zweier in einem Gehäuseteil aufgenommenen Lager. Nach Ausführen der erfindungsgemäßen Herstellung ist die Lagerluft des Lagers nicht abhängig von Fertigungstoleranzen.

Bei einer vorteilhaften Ausgestaltung weist die Welle ein Planetenträger auf, welcher Ausnehmungen zur Aufnahme eines Sonnenrads, von Planetenrädern und von Bolzen zur Lagerung der Planetenräder über zwischengeordnete Lager, insbesondere Nadellager, aufweist,
insbesondere wobei der nach radial innengerichtete Bund des Gehäuseteils eine Innenverzahnung aufweist, welche im Eingriff mit der Verzahnung der Planetenräder ist. Von Vorteil ist dabei, dass der Kraftfluss durch den Bereich der Innenverzahnung geleitet wird und somit eine hohe Elastizität bewirkt wird, da der dünne Bereich des Bundes hohen Kräften ausgesetzt ist.

Bei einer vorteilhaften Ausgestaltung liegt der Quotient a / d im Bereich zwischen 0,1 und 0,4, wobei a der axiale Abstand und d der Außendurchmesser des ersten Lagers und/oder des zweiten Lagers ist. Von Vorteil ist dabei, dass die Lageranordnung axial wenig ausgedehnt ist und somit die Welle bei geringfügigen Querkräften oder infolge entsprechender geometrischer Fertigungstoleranzen verkippen kann. Vorteil ist dabei auch, dass bei einer Lagerung mit einem geringen axialen Abstand und einer großen radialen Abmessung, bei der er während der Montage zum Verkippen des Lagers kommen kann, die Vorspannkraft präzise eingebracht werden kann.

Bei einer vorteilhaften Ausgestaltung liegt der Quotient w / d_i zwischen 0,01 bis 0,04, wobei w die Wandstärke des Innenrings des ersten Lagers ist und d_i der Außendurchmesser d_i des Innenrings des ersten Lagers und/oder zweiten Lagers ist,
und/oder dass die radiale Wandstärke der Wellenmutter, insbesondere geringfügig, größer ist als die radiale Wandstärke des Innenrings des ersten Lagers und/oder des zweiten Lagers. Von Vorteil ist dabei, dass die Lager mit sehr dünnen Innenringen ausstattbar sind und dass bei diesen Lagern die Vorspannung präzise einbringbar ist. Denn durch das präzise Einstellen der Vorspannung ist eine Überlastung vermeidbar.

Bei einer vorteilhaften Ausgestaltung ist der bezogen auf die Drehachse des Planetenträgers in axialer Richtung überdeckte Bereich der Ausnehmung zur Aufnahme der Planetenräder von dem in axialer Richtung von dem ersten Lager, von dem Bund des Gehäuseteils und von dem zweiten Lager überdeckten Bereich umfasst. Von Vorteil ist dabei, dass eine Abdeckung nach radial außen bewirkt ist und somit eine hohe Schutzart und hohe Sicherheit.

Wichtige Merkmale bei **einem** Verfahren zum Einstellen eines Vorspannkraftwertes bei einem vorgenannten System sind, dass
in einem ersten Verfahrensschritt die Abhängigkeit einer axial gerichteten Verschiebung der Welle von eine auf die Welle axial gerichteten Kraft bestimmt wird, insbesondere also Kennlinie, und/oder die Abhängigkeit einer Relativposition zwischen Innenring und Außenring bei Anliegen einer axial gerichteten Kraft bestimmt wird,
wobei die Kraft an der von der Wellenmutter abgewandten Stirnseite der Welle eingebracht wird, insbesondere auf der von der Wellenmutter abgewandten Seite des ersten Lagers eingebracht wird, und die Wellenmutter nicht angezogen ist, insbesondere also das zweite Lager nicht berührt und/oder keine wesentliche Kraft in das zweite Lager einleitet,
wobei in einem zeitlich nach dem ersten Verfahrensschritt nachfolgenden zweiten Verfahrensschritt
gemäß der im ersten Verfahrensschritt bestimmten Abhängigkeit ein Verschiebungswert, insbesondere ein Relativpositionswert, bestimmt wird, welcher von einer Kraft erzeugt wird, die dem Vorspannkraftwert gleicht, und aus dem Verschiebungswert unter Berücksichtigung der Steigung des Gewindes der Wellenmutter ein Drehwinkel bestimmt wird, um den die Wellenmutter dann angezogen wird.

Unter dem Anziehen um einen Drehwinkel, der unter Berücksichtigung der Steigung bestimmt wird, wird auch ein Anziehen subsummiert, das die vorgegebene Relativposition erreicht.

Die Wellenmutter ist auch durch ein anderes axiales Fixierungselement ersetzbar.

Von Vorteil ist dabei, dass gemäß Kennlinie der zum Erreichen Vorspannkraftwertes zugehörige Verschiebungswert und somit Anzieh-Drehwinkel der Wellenmutter bestimmt wird und im nächsten Schritt einstellbar ist.

Wichtige Merkmale bei **einem** Verfahren zum Einstellen eines Vorspannkraftwertes bei einem vorgenannten System sind, dass
in einem ersten Verfahrensschritt die Abhängigkeit einer axial gerichteten Verschiebung der Welle von einer in die Welle eingeleiteten, axial gerichteten Kraft bestimmt wird, insbesondere also Kennlinie,
wobei die Kraft an der von der Wellenmutter abgewandten Stirnseite der Welle eingebracht wird, insbesondere auf der von der Wellenmutter abgewandten Seite des ersten Lagers eingebracht wird, und die Wellenmutter nicht angezogen ist, insbesondere also das zweite Lager nicht berührt und/oder keine wesentliche Kraft in das zweite Lager einleitet,
wobei in einem zeitlich nach dem ersten Verfahrensschritt nachfolgenden zweiten Verfahrensschritt
gemäß der im ersten Verfahrensschritt bestimmten Abhängigkeit ein Verschiebungswert bestimmt wird, welcher von einer Kraft erzeugt wird, deren Betrag dem Vorspannkraftwert gleicht, und aus dem Verschiebungswert unter Berücksichtigung der Steigung des Gewindes der Wellenmutter ein Drehwinkel bestimmt wird,
wobei in einem zeitlich nach dem zweiten Verfahrensschritt nachfolgenden dritten Verfahrensschritt die Wellenmutter um einen Winkelbetrag weitergedreht wird, insbesondere weiter angezogen wird, wobei der Winkelbetrag kleiner als der Drehwinkel ist,
wobei in einem zeitlich nach dem dritten Verfahrensschritt nachfolgenden vierten Verfahrensschritt wiederum die Abhängigkeit der axial gerichteten Verschiebung der Welle von der in die Welle eingeleiteten, axial gerichteten Kraft bestimmt wird, insbesondere also Kennlinie,
wobei die Kraft an der von der Wellenmutter abgewandten Stirnseite der Welle eingebracht wird, insbesondere auf der von der Wellenmutter abgewandten Seite des ersten Lagers eingebracht wird,
wobei danach der dritte und vierte Verfahrensschritt so oft wiederholt werden, bis der Vorspannkraftwert erreicht ist oder bis gemäß der zuletzt bestimmten Abhängigkeit der Vorspannkraftwert mittels einer Drehung der Wellenmutter um einen Restwinkel erreichbar ist,
wobei der Restwinkel unter Berücksichtigung der Steigung des Gewindes der Wellenmutter einem Rest-Verschiebungswert entspricht, dem gemäß der zuletzt bestimmten Abhängigkeit ein Kraftwert zugehört, welcher dem Vorspannkraftwert gleicht,
wobei die Wellenmutter um den Restwinkel weitergedreht, insbesondere angezogen, wird,
insbesondere wobei der Restwinkel kleiner als der Winkelbetrag ist.

Von Vorteil ist dabei, dass durch das gestufte Verdrehen der Wellenmutter und durch die wiederholte und somit immer wenige und immer sicher wenige Lagerluft enthaltende erneute Bestimmen der Kennlinie ein möglichst genauer Vorspannungskraftwert einstellbar ist.

Wichtig ist dabei auch, dass die Kraft beim Bestimmen der Kennlinie nicht einseitig durch Drücken aufbringbar ist. Ein Ziehen ist nicht notwendig.

Die Erfindung wird nun anhand von schematischen Abbildungen näher erläutert:
In der Figur 1 ist ein Planetengetriebe dargestellt, wobei eine Kraft F von der abtreibenden Seite heraufgebracht wird, die Wellenmutter 10 nicht angezogen ist und Planetenräder und Sonnenrad nicht dargestellt sind.

In der Figur 2 ist die Verschiebung s, insbesondere Relativposition, zwischen einem unbelasteten Planetengetriebe 20 und einem belasteten Planetengetriebe 21 dargestellt.

In der Figur 3 ist im Unterschied zur Figur 1 die Wellenmutter 10 angezogen, wobei keine Kraft F von außen auf den Planetenträger 3 aufgebracht wird, sondern der im Getriebe vorliegende Kraftfluss durch Vorspannung der Wellenmutter 10 erzeugt wird.

In der Figur 4 ist die durch eine von außen auf den Planetenträger 3 aufgebrachte Kraft F bewirkte Verschiebung d, insbesondere Relativposition, als Funktion dieser Kraft F dargestellt.

Wie in den Figuren dargestellt, weist das Planetengetriebe einen über zwei Lager (1, 2) in einem Gehäuseteil 10, insbesondere Hohlrad, gelagerten Planetenträger 3 auf.

In den Planetenträger 3 sind Bolzen 6 eingepresst, auf denen Planetenräder drehbar lagerbar sind, welche im Eingriff mit einem mittig angeordneten Sonnenrad und der Innenverzahnung des Gehäuseteils 10, insbesondere des Hohlrads, sind.

Das erste der Lager 1 ist zwischen einem nach radial innen vorragenden Bund und einer am Planetenträger 3 ausgeformten, auf der vom Bund axial abgewandten Seite des Lagers 1 angeordnet.

Das zweite der Lager 2 ist zwischen dem Bund des Gehäuseteils 10 und einer auf ein Außengewinde des Planetenträgers 3 mit ihrem Innengewinde aufgeschraubten Wellenmutter 9 angeordnet. Die Wellenmutter 9 ist auf der vom Bund axial abgewandten Seite des zweiten Lagers 2 angeordnet.

Durch Anziehen der Wellenmutter 9 ist eine Vorspannung in die Lagerung des Planetenträgers 3 einbringbar.

Die Lager 1 und 2 sind Wälzlager, vorzugsweise Kugellager oder Schrägrollenlager.

Da die Lager 1 und 2 sehr nah beieinander angeordnet sind, insbesondere mit einem axialen Abstand a, und beide einen sehr großen Außendurchmesser d aufweisen, ist es Aufgabe der Erfindung, eventuell vorhandene Luft, also Spiel der Lagerung, in definierter Weise zu berücksichtigen und trotzdem eine definiert vorgegebene Vorspannung aufzubringen.

Das Verhältnis a / d liegt im Bereich zwischen 0,1 und 0,4.

Außerdem werden als Lager 1 und 2 solche Lager verwendet, welche einen dünnen Innenring aufweisen. Dabei weist die Wandstärke w zum Außendurchmesser d_i des Innenrings des Lagers 1 oder 2 ein Verhältnis w / d_i zwischen 0,01 bis 0,04 auf.

Die radiale Wandstärke der Wellenmutter 9 ist vorzugsweise geringfügig größer als die radiale Wandstärke des Innenrings des Lagers (1, 2).

Das Sonnenrad wird von der eintreibenden Seite 5 hereingeführt und ist drehfest mit der Rotorwelle eines antreibenden Elektromotors oder mit einer anderen antreibenden Welle, wie beispielsweise die Welle einer Getriebevorstufe verbunden.

Zur Einstellung der Vorspannung wird in einem ersten Verfahrensschritt von der Abtriebsseite her, also von der von der Wellenmutter 9 abgewandten Seite her, eine Kraft F aufgebracht, und die dadurch bewirkte Verschiebung s, insbesondere Relativposition, gemessen. Dies erfolgt vorzugsweise durch einen Wegmesssensor, welcher auf der abtreibenden Seite 4 angeordnet ist und gegen den Planetenträger 3 gedrückt angeordnet ist.

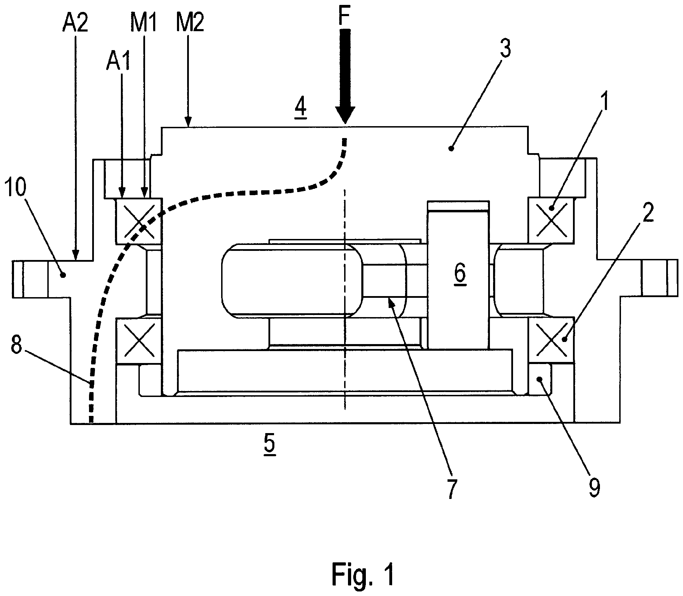

Die mittig in axialer Richtung auf den Planetenträger 3 aufgebrachte Kraft F ist in Figur 1 dargestellt und der zugehörige Kraftfluss 8 ebenfalls. Dabei ist ersichtlich, dass die Kraft vom Planetenträger 3 über das erste der Lager 1 ins Gehäuseteil 10 fließt.

Während des ersten Verfahrensschrittes ist die Wellenmutter 9 nicht angezogen, drückt also nicht auf den Innenring des Lagers 2.

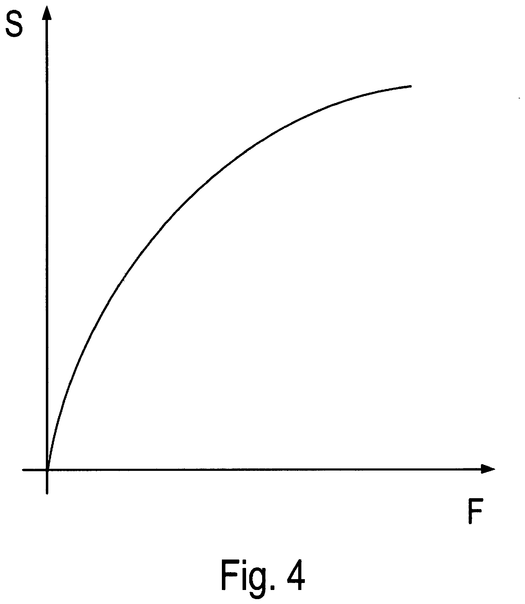

Die bei zunehmender Kraft F bewirkte Verschiebung s, insbesondere Relativposition, ist in Figur 4 dargestellt.

Somit wird also im ersten Verfahrensschritt die Kennline bestimmt.

Ziel des Verfahrens ist, eine definierte Vorspannung durch die Wellenmutter 9 in die Lageranordnung des Planetenträgers 3 einzubringen.

Die vorgegebene Kraft, beispielsweise 2000 N, entspricht gemäß Kennlinie einer Verschiebung s = s1.

Im zweiten Verfahrensschritt wird die Wellenmutter angezogen. Dabei wird aus der gewünschten Verschiebung s1 unter Berücksichtigung der Steigung des Innengewindes der Wellenmutter 9 der Drehwinkel für die Wellenmutter 9 bestimmt. Dabei wird der Drehwinkel ab dem Berühren zwischen Wellenmutter 9 und Innenring des Lagers 2 angewendet.

In einem anderen Ausführungsbeispiel wird im zweiten Schritt nur ein kleiner Drehwinkel angewendet, beispielsweise 10°.

In einem anderen Ausführungsbeispiel wird statt des Anziehens um einen Drehwinkel derart angezogen, dass die gewünschte Verschiebung, insbesondere Relativposition, erreicht wird. Vorzugsweise wird also die Relativposition erfasst und überwacht auf Erreichen der gewünschten Verschiebung, insbesondere Relativposition.

Danach wird in einem dritten Verfahrensschritt wiederum eine Kennlinie gemessen, wie auch schon im ersten Verfahrensschritt. Somit ist die Kennlinie dann unter Verringerung von Lagerluft erfasst.

Danach wird in einem vierten Verfahrensschritt die Wellenmutter 9 wiederum um einen kleinen Drehwinkel weitergedreht und danach der dritte Verfahrensschritt wiederholt, also die Kennlinie erfasst.

Dieses gestufte Verdrehen der Wellenmutter 9 wird so lange angewendet, bis beim Erfassen der Kennlinie entweder klar erkennbar ist, dass die Lagerluft vollständig beseitigt ist und die Kennlinie genügend genau erfasst ist, also nur noch geringe Messwertschwankungen auftreten, oder erkennbar ist, dass ein Weiterdrehen um den kleinen Winkelbetrag zu einer Überschreitung der gewünschten Vorspannkraft führen würde.

In einem letzten Verfahrensschritt wird dann die noch fehlende Verschiebung zum Erreichen der gewünschten Vorspannkraft bestimmt und daraus auch der zugehörige fehlende Winkelbetrag für das Verdrehen der Wellenmutter bestimmt und angewendet.

Mittels der gestuften Verdrehung der Wellenmutter 9 ist somit sichergestellt, dass die gewünschte Vorspannung möglichst genau einstellbar ist, insbesondere, dass keine Lagerluft mehr vorhanden ist und somit die gewünschte Vorspannung möglichst genau einstellbar ist.

Im Ausführungsbeispiel muss die Wellenmutter etwa 50° gedreht werden, um eine Verschiebung von 9 µm zu erreichen, was dann zu einer Vorspannkraft von 2000 N führt. Alternativ wird die Verschiebung mit einem Messgerät überwacht und bei Erreichen von 9 µm das Anziehen der Wellenmutter, also die Drehung der Wellenmutter, beendet.

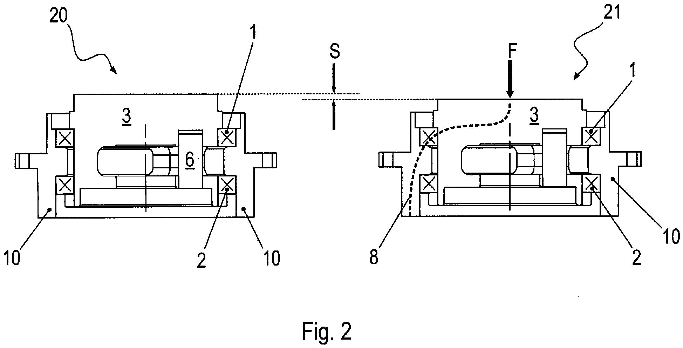

Im linken Teil der Figur 2 ist die Anordnung unbelastet dargestellt, im rechten Teil der Figur 2 mit einer Kraft F beaufschlagt, so dass eine Verschiebung s, insbesondere Relativposition, erzeugt wird. Die am Planetenträger 3 eingebrachte Kraft F wird am Gehäuseteil 10 herausgeleitet. Die Verschiebung s, insbesondere Relativposition, wird von der abtreibenden Seite 4 des Planetenträgers 3 her gemessen, kann aber auch an der eintreibenden Seite 5 des Planetenträgers 3 mit einem Wegmesssensor erfasst werden, wenn dieser dort zugänglich ist, also kein antreibender Motor beziehungsweise keine antreibende Getriebevorstufe verbunden wird und ein zur Drehung der Wellenmutter 9 angesetztes Werkzeug nicht stört. Das Werkzeug wird mit Bolzen in axial gerichtete Bohrungen der Wellenmutter 9 eingesteckt und somit zur Betätigung lösbar und in Umfangsrichtung formschlüssig mit der Wellenmutter 9 von der eintreibenden Seite 5 her verbunden.

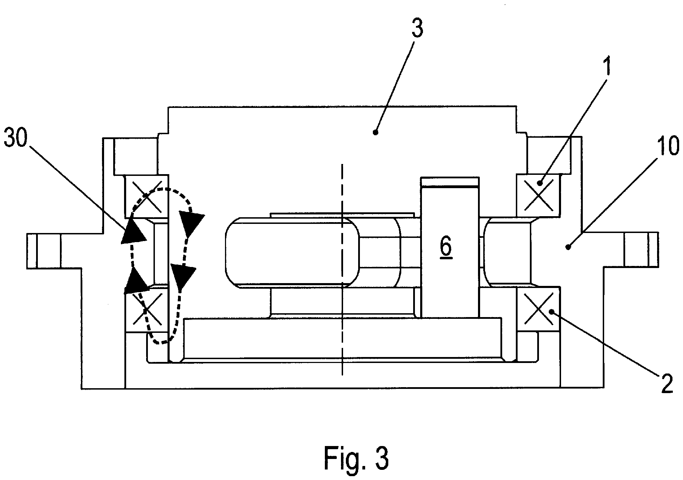

Nach Beenden des von außen einfließenden Andrückens des Planetenträgers 3 und nach Anziehen der Wellenmutter 9 stellt sich dann der in Figur 3 schematisch angedeutete geschlossene Kraftfluss 30 ein, also die gewünschte Vorspannung. Dabei drückt die am Planetenträger 3 ausgeformte Stufe den Innenring des Lagers 1 zur Wellenmutter 9 hin und die Wellenmutter 9 drückt gegen den Innenring des Lagers 2. Daher wird der Außenring des Lagers 1 auf den am Gehäuseteil 10 ausgeformten, nach radial innen herausstehenden und/oder hervorragenden, axial zwischen Lager 1 und Lager 2 angeordneten Bund gedrückt. Ebenso wird der Außenring des Lagers 2 gegen den Bund gedrückt, wobei die Andrückkraft entgegengesetzt zur Andrückkraft des Außenrings des Lagers 1 gegen den Bund ausgerichtet ist.

Der Kraftfluss fließt also von der Wellenmutter durch das Lager 2 ins Gehäuseteil 10, insbesondere in den Bund, und vom Gehäuseteil 10, insbesondere vom Bund, durch das Lager 1 zum Planetenträger 3, von wo er zurückfließt in die Wellenmutter 9.

Da der Planetenträger Ausnehmungen, insbesondere einen hohlen Bereich, zur Aufnahme der Planetenräder und der Sonne aufweist, muss der Kraftfluss 30 zur Wellenmutter 9 zurück durch einen dünnen Restwandbereich. Somit ist eine höhere Elastizität im Kraftflussweg vorhanden als bei Einsatz einer Vollwelle anstatt des Planetenträgers.

Als Messmittel zur Bestimmung des Verschiebungswerts, insbesondere der Relativposition, ist eine Mikrometer-Uhr verwendbar. Um durch Elastizitäten der Welle verursachte Einflüsse zu verringern, ist das Messmittel vorzugsweise am Außenring des ersten Lagers 1 abgestützt, was in Figur 1 mit dem Bezugszeichen A1 gekennzeichnet ist.

Idealerweise wird als Messstelle M1 für das Messmittel der Innenring des ersten Lagers 1 verwendet.

Da die Zugänglichkeit des ersten Lagers 1 suboptimal sein kann, wird das Messmittel alternativ am Gehäuseteil 10 abgestützt, was mit dem Bezugszeichen A2 in Figur 1 gekennzeichnet ist. Die Messstelle M2 für das Messmittel ist anstatt der idealen Stelle am Innenring des ersten Lagers 1 alternativ auch auf derjenigen Stirnseite der Welle 3 anordenbar, auf welche die Kraft F eingebracht wird.

Vorzugsweise sind die Messstellen außerhalb des belasteten Bereiches angeordnet, um mögliche elastische Verformungen und damit eine Verfälschung der Messergebnisse zu minimieren.

Bei Massenherstellung von Getrieben ist somit in sehr einfacher Weise in einem ersten Verfahrensschritt eine dem Vorspannkraftwert entsprechende Axialkraft auf diese Stirnseite der Welle 3 einbringbar, wobei dann mit dem Messmittel der Verschiebungswert zwischen Welle und Gehäuseteil oder vorzugsweise zwischen Innenring und Außenring des ersten Lagers 1 bestimmt wird und nach Beenden des Einbringens der Axialkraft der so bestimmte Verschiebungswert durch Einstellen der Wellenmutter 9, insbesondere unter Berücksichtigung des Steigungswinkels, eingestellt wird. Auf diese Weise ist die Lagerluft beseitigbar und der Vorspannkraftwert exakt einstellbar, obwohl er direkt überhaupt nicht bestimmbar ist.

Zwar wäre die Erfindung auch auf Systeme anwendbar, bei denen anstatt des Planetenträgers eine Vollwelle verwendet wird, aber dann sind Schwingungen im Betrieb, die zu Kraftflussschwankungen führen schlechter kompensierbar.

Die Erfindung ist auch auf andere Lagerungssysteme übertragbar, insbesondere gerade dann, wenn hohen Anforderungen an die Genauigkeit der Vorspannung gestellt werden.

Daher ist die Erfindung besonders vorteilhaft bei Planetengetriebestufen oder Planetengetrieben anwendbar. Insbesondere bei Planetengetrieben mit kurzen Lagerabständen und großen Durchmessern im Verhältnis zu den Lagerabständen ist die Erfindung besonders vorteilhaft.

Bei solchen Planetengetriebestufen bringen die miteinander kämmenden Verzahnungsteile, wie Planetenräder, Sonne und Hohlrad Schwingungen ein, die auch durch den Planetenträger 3 fließen und auf den Kraftfluss 30 aufmoduliert werden. Durch die erhöhte Elastizität des Planetenträgers 3 wird also die Belastung der Lager 1 und 2 vermindert und somit eine höhere Standzeit erreichbar.

### Bezugszeichenliste

1 Lager
2 Lager
3 Planetenträger
4 Abtriebsseite
5 eintreibende Seite
6 Bolzen
7 Raumbereich für Planetenrad
8 Kraftfluss
9 Wellenmutter
10 Gehäuseteil, insbesondere Hohlrad
A1 Abstützung des Messmittels für den Verschiebungswert
A2 Abstützung des Messmittels für den Verschiebungswert
M1 Messstelle des Messmittels für den Verschiebungswert
M2 Messstelle des Messmittels für den Verschiebungswert

## Patentansprüche

1. Verfahren zum Einstellen eines Vorspannkraftwertes bei einem System,
dass eine Welle, ein Gehäuseteil (10) und zwei Lager (1, 2) sowie ein Fixierelement, nämlich eine Wellenmutter (9), aufweist,
wobei ein erstes Lager (1, 2) im Gehäuseteil (10) aufgenommen ist und ein zweites Lager (1, 2) im Gehäuseteil (10) aufgenommen ist,
wobei die Welle drehbar gelagert ist mittels des ersten und zweiten Lagers (1, 2),
wobei mittels des Fixierelements die Welle axial positionierbar ist relativ zum Innenring des zweiten Lagers (1, 2),
wobei die Drehachse der Welle die axiale Richtung ist,
wobei in axialer Richtung das Fixierelement auf der vom ersten Lager (1, 2) abgewandten Seite des zweiten Lagers (1, 2) angeordnet ist,
**dadurch gekennzeichnet, dass**
in einem ersten Verfahrensschritt bei losem Fixierelement eine axial gerichtete Kraft
- auf diejenige Stirnseite der Welle eingebracht wird, welche auf der vom zweiten Lager (1, 2) abgewandten und auf der von dem Fixierelement abgewandten Seite des ersten Lagers (1, 2) angeordnet ist,
wobei also das Fixierelement das zweite Lager (1, 2) nicht berührt und/oder keine wesentliche Kraft in das zweite Lager (1, 2) einleitet,
wobei der Betrag der Kraft dem Vorspannkraftwert gleicht,
wobei im ersten Verfahrensschritt die durch die eingebrachte Kraft bewirkte, in axialer Richtung bestimmte Relativposition, also Verschiebungswert,
- zwischen dem Gehäuseteil (10) und der Stirnseite der Welle bestimmt wird,
wobei in einem zweiten Verfahrensschritt die axiale Kraft nicht eingebracht wird, also das Einbringen der axialen Kraft beendet wird,
wobei mittels des Fixierelements die bestimmte Relativposition eingestellt wird, also das Fixierelement derart betätigt oder eingestellt wird, dass die bestimmte Relativposition eingestellt ist.

2. Verfahren nach Anspruch 1,
**dadurch gekennzeichnet, dass**
die Verschiebung
- die Relativposition zwischen Innenring und Außenring ist
- oder die Relativposition zwischen der den Innenring des ersten Lagers (1, 2) aufnehmenden Komponente und der den Außenring des ersten Lagers (1, 2) aufnehmenden Komponente ist.

## Claims

1. Method for setting a preload force value in a system, said system comprising a shaft, a housing part (10) and two bearings (1, 2) as well as a fixing element, namely a shaft nut (9),
wherein a first bearing (1, 2) is accommodated in the housing part (10) and a second bearing (1, 2) is accommodated in the housing part (10),
wherein the shaft is rotatably mounted by means of the first and second bearing (1, 2),
wherein, by means of the fixing element, the shaft can be axially positioned relative to the inner ring of the second bearing (1, 2),
wherein the axis of rotation of the shaft is the axial direction, wherein, in the axial direction, the fixing element is arranged on the side of the second bearing (1, 2) facing away from the first bearing (1, 2),
**characterized in that**
in a first method step, with the fixing element loose, an axially directed force
- is introduced onto that end face of the shaft that is arranged on the side of the first bearing (1, 2) facing away from the second bearing (1, 2) and facing away from the fixing element,
wherein the fixing element therefore does not touch the second bearing (1, 2) and/or does not introduce any significant force into the second bearing (1, 2),
wherein the magnitude of the force is equal to the preload force value,
wherein in the first method step the relative position, that is to say the displacement value, brought about by the introduced force and determined in the axial direction
- is determined between the housing part (10) and the end face of the shaft,
wherein in a second method step the axial force is not introduced, that is to say the introduction of the axial force is terminated,
wherein the determined relative position is set by means of the fixing element, that is to say the fixing element is actuated or adjusted in such a way that the determined relative position is set.

2. Method according to claim 1,
**characterized in that**
the displacement is
- the relative position between the inner ring and the outer ring,
- or the relative position between the component accommodating the inner ring of the first bearing (1, 2) and the component accommodating the outer ring of the first bearing (1, 2).

## Revendications

1. Procédé de réglage de la valeur d'une force de précontrainte dans un système comprenant un arbre, une partie (10) formant carter et deux paliers (1, 2), ainsi qu'un élément de blocage à demeure, à savoir un écrou (9) d'arbre,
un premier palier (1, 2) étant logé dans la partie (10) formant carter, et un second palier (1, 2) étant logé dans ladite partie (10) formant carter,
l'arbre étant monté à rotation au moyen desdits premier et second paliers (1, 2),
ledit arbre pouvant être positionné axialement, au moyen de l'élément de blocage à demeure, par rapport à la bague intérieure du second palier (1, 2),
l'axe de rotation dudit arbre étant la direction axiale,
ledit élément de blocage à demeure étant disposé, dans la direction axiale, du côté dudit second palier (1, 2) qui pointe à l'opposé du premier palier (1, 2),
**caractérisé par le fait que**,
lors d'une première étape opératoire, l'élément de blocage à demeure étant desserré, une force dirigée axialement
- est appliquée à la face extrême de l'arbre qui est située du côté du premier palier (1, 2) pointant à l'opposé du second palier (1, 2) et du côté dudit premier palier (1, 2) pointant à l'opposé de l'élément de blocage à demeure,
sachant, en conséquence, que ledit élément de blocage à demeure n'est pas en contact avec le second palier (1, 2) et/ou n'introduit aucune force notable dans ledit second palier (1, 2),
l'ampleur de ladite force étant égale à la valeur de la force de précontrainte,
sachant que, lors de ladite première étape opératoire, l'emplacement relatif provoqué par la force appliquée et déterminé dans la direction axiale, à savoir la valeur de décalage,
- est déterminé(e) entre la partie (10) formant carter et la face extrême de l'arbre, sachant que la force axiale n'est pas appliquée au cours d'une seconde étape opératoire, c'est-à-dire qu'il est mis un terme à l'application de ladite force axiale,
l'emplacement relatif déterminé étant alors réglé au moyen de l'élément de blocage à demeure, c'est-à-dire que ledit élément de blocage à demeure est actionné ou réglé de manière que ledit emplacement relatif déterminé s'en trouve réglé.

2. Procédé selon la revendication 1,
**caractérisé par le fait que**
le décalage
- est l'emplacement relatif entre la bague intérieure et la bague extérieure,
- ou bien l'emplacement relatif se situe entre la pièce structurelle recevant la bague intérieure du premier palier (1, 2) et la pièce structurelle recevant la bague extérieure dudit premier palier (1, 2).
